Europäisches Patentamt

(19) European Patent Office  (11) Publication number: **0 091 247**

Office européen des brevets  **B1**

(12) **EUROPEAN PATENT SPECIFICATION**

(45) Date of publication of patent specification: **23.07.86**  (51) Int. Cl.⁴: **C 03 C 4/04,** C 03 C 21/00, C 03 C 23/00

(21) Application number: **83301684.3**

(22) Date of filing: **25.03.83**

(54) Coloured photochromic glasses and method for production thereof.

---

(30) Priority: **01.04.82 US 364472**

(43) Date of publication of application: **12.10.83 Bulletin 83/41**

(45) Publication of the grant of the patent: **23.07.86 Bulletin 86/30**

(84) Designated Contracting States: **DE FR GB**

(56) References cited:
**GB-A-2 063 852
US-A-4 018 965
US-A-4 240 836**

(73) Proprietor: **Corning Glass Works
Houghton Park
Corning New York 14831 (US)**

(72) Inventor: **Borrelli, Nicholas Francis
935 West Water Street
Elmira New York (US)**
Inventor: **Hares, George Bigelow
31 East Fourth Street
Corning New York 14831 (US)**
Inventor: **Smith, Dennis Wayne
Wilson Hollow Road
Corning New York (US)**
Inventor: **Wedding, Brent Merle
3 East Third Street
Corning New York (US)**

(74) Representative: **Smith, Sydney et al
Elkington and Fife High Holborn House 52/54
High Holborn
London WC1V 6SH (GB)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to photochromic glasses. More particularly, it relates to a method of controlling and adjusting a permanent surface colouration, developed by heat treatment in the presence of a reducing agent, in a photochromic glass article containing a silver halide as a photochromic agent.

Characteristically, photochromic glasses darken upon exposure to actinic radiation, particularly ultraviolet light, and fade or lighten upon removal of the activating radiation. Thus far, commercial applications for these glasses have been principally in the fields of ophthalmic and sunglass lenses. The commercially significant glasses employ one or more selected silver halide(s) as their active ingredient, and were first described by Armistead et al. in United States Patent No. 3,208,860.

Since that time, silver halide-containing, photochromic glasses that exhibit improved darkening and fading characteristics have been developed. One such family of glasses is described by G. B. Hares et al. in United States Patent No. 4,190,451.

Photochromic glasses are also known that possess non-neutral colouration by transmitted light in the undarkened state. Glass bodies, in which such colouration is developed throughout the body, may be produced by the addition of known light-absorbing colourants in the initial glass melt.

Alternatively, photochromic glasses may have permanent colouration imparted in a surface layer by a reduction heat treatment. United States Patents No. 3,892,582 and No. 3,920,463 (Simms) disclose such a procedure. The patents teach that pink, yellow, and brown colours may be developed by firing, in a reducing atmosphere, an article formed from certain silver halide-containing photochromic glasses.

Photochromic glasses, having a yellow colour imparted by the procedure described in the Simms' patents, have been produced commercially. The surface colour development is attributed to an absorption band caused by the precipitation of metallic silver in the glass during heat treatment. In silver-containing glasses free of other precipitated phases, the silver absorption band is manifested as an absorption peak centered at 400—410 nm in the violet region of the spectrum. In the reduction-fired, photochromic glasses reported in the aforementioned Simms' patents, which contain precipitated silver halide in addition to the matrix glass, absorption peaks are reported in the blue region of the spectrum between 430—460 nm.

The hue and intensity of the induced colour in prior art glasses probably depended upon the position and intensity of the treatment-induced absorption peak. The deepest yellow colours were caused by strong absorption peaks at 430 to 460 nm, while the light pink colour is now thought to have been caused by the same fundamental absorption peak as it first appeared in weak form at approximately 500 nm following a mild heat treatment. Other patents within this field which may be mentioned are the following:—

United States Patent No. 4,118,214 (Wedding) describes a method of producing a variety of colours in a silver halide-containing, glass by a combination of exposure to high energy radiation, heat treatment, and exposure to a reducing atmosphere at a temperature of at least 350°C. This is a very different procedure to that of the invention and produces distinctly different colour effects.

United States Patent No. 4,125,405 (Araujo et al.) describes red, silver halide-containing glasses which are slightly photochromic, and which are produced by melting the glass under reducing conditions. These glasses do not have adequate photochromicity for commercial use.

United States Patent No. 4,018,965 (Kerko et al.) discloses silver halide-containing, lithium boro-aluminasilicate glasses which exhibit excellent photochromic properties after heat treatment, and which are chemically strengthenable by ion exchange procedures.

United States Patents No. 3,790,430 (Mochel) and No. 2,779,136 (Hood et al), respectively, provide typical disclosures of sodium ion for lithium ion exchange, and, conversely, lithium ion for sodium ion exchange. Reference may also be made to United States Patent No. 2,075,446 which shows exchange of silver or copper ions for alkali metal ions. In the case of copper ions, a subsequent reducing treatment changes colour, but is taught to have no effect on the amber colour produced by silver ions.

United States Patent No. 4,240,836 (Borrelli et al) discloses surface-coloured photochromic glass articles exhibiting a wide range of colours in the undarkened state. The colours range from blue to orange, red and purple, and are the result of inducing absorption peaks at longer wave lengths above 460 nm, and frequently in the 510—580 nm range. A primary condition in the Borrelli et al. procedure is restricting the temperature of the heat treatment in a reducing atmosphere to not over 450°C. This minimizes possible melting of the photochromic phase (silver halide) during the reduction step. Reference is made to the possibility of chemically strengthening the lens blank before development of colouration therein by immersion in a molten salt ion exchange strengthening bath containing $KNO_3$ and $NaNO_3$ at a temperature of 400°C for 16 hours.

The colour development procedure disclosed in the Borrelli et al. patent has a great deal of commercial potential. However, it would still be desirable to extend further the colours and hues obtainable, as well as provide closer control of the procedure. It is the general purpose of this invention to meet that need.

According to the invention there is provided a method of producing a permanent colouration in a surface zone on a photochromic glass article wherein a silver halide is the photochromic agent, wherein the glass composition contains at least one alkali metal oxide selected from $Na_2O$ and $Li_2O$ and wherein the glass article is heat treated at a temperature not exceeding about 450°C under reducing conditions for a time at least sufficient to modify the light absorption characteristics of the article surface, characterised in that the content of lithium or sodium oxide is altered by exchanging in at least a portion of the surface colouration zone of the article sodium ions from an external source for lithium ions from the glass surface zone by immersing the article at least partially in a molten salt bath composed of sodium nitrate for at least five minutes, the bath being maintained at a temperature in the range of 325° to 450°C, to correspondingly shift the absorption characteristics imparted to the article during the reduction treatment.

The present invention thus represents an extension of the method disclosed in Borrelli et al. US—A—4240836. Hence, the process steps and material disclosures of that patent are equally applicable here. In general, the patent describes exposing a silver halide-containing photochromic glass article to a flowing gaseous reducing atmosphere at a temperature not exceeding 450°C. The exposure is for a time sufficient to induce a permanent colouration by modifying light absorption characteristics in the glass surface.

The patent teaches that it is very difficult to provide orange, red, purple and/or blue colouration when heat treating temperatures substantially above 450°C are employed. Thus, in a particular glass, use of temperatures above 450°C caused an absorption peak at 510 nm to shift over to become a peak at 450 nm. The result was a glass lighter and more yellow in colour. Accordingly, heat treating temperatures in the range of 200—450°C are recommended, and that recommendation is equally applicable to the present invention. A preferred temperature range is 350—400°C.

The patent discloses that a variety of known reducing gases may be employed to induce surface colouration during heat treatment. These include hydrogen ($H_2$), forming gas (e.g., a 95% $N_2+5\%$ $H_2$ by volume mixture), carbon monoxide, and $H_2$—$N_2$ mixtures produced by cracking ammonia. Such gaseous mixtures are preferred for present purposes as well.

The patent suggests that base glass composition, as well as prior thermal history, may have an important effect on the surface colouration obtained. Thus, it notes different effects achieved with two different photochromic glasses. However, it provides no indication regarding the effect of individual components in the compositions.

The patent indicates that silver halide-containing glasses, in general, may be employed. However, a preference is expressed for glasses disclosed in United States Patent No. 4,190,451 (Hares et al.). These glasses consist essentially, in weight percent, of 0—2.5% $Li_2O$, 0—9% $Na_2O$, 0—17% $K_2O$, 0—6% $Cs_2O$, 8—20% $Li_2O+Na_2O+K_2O+Cs_2O$, 14—23% $B_2O_3$, 5—25% $Al_2O_3$, 0—25% $P_2O_5$, 20—65% $SiO_2$, 0.004—0.02% CuO, 0.15—0.3% Ag, 0.1—0.25% Cl, and 0.1—0.2% Br, wherein the molar ratio of alkali metal oxides: $B_2O_3$ ranges between 0.55—0.85 and the weight ratio Ag: (Cl+Br) ranges between 0.65—0.95. As also noted in the Hares et al. disclosure, such glasses may additionally contain, as optional constituents, up to 10% total of other selected oxides or elements for known purposes, including up to 6% $ZrO_2$, up to 3% $TiO_2$, up to 0.5% PbO, up to 7% BaO, up to 4% CaO, up to 3% MgO, up to 6% $Nb_2O_5$, up to 4% $La_2O_3$, and up to 2% F.

The present invention is based in studies and observations made with respect to glass samples taken periodically during an extended tank run of a photochromic glass. During the run, glass composition was maintained essentially constant, except that, at one point, the soda ($Na_2O$) content was decreased by a small amount. When glass samples taken subsequent to the decrease were exposed to the combination reduction and heat treatment of Borrelli et al., it was observed that these samples took on a different permanent colouration than did earlier samples exposed to the same treatment.

Subsequent studies confirmed that the reduction colour produced in the surface of a silver halide-containing photochromic glass was dependent on the soda content in the glass. Furthermore, they demonstrated that the colour obtained could be varied in a controlled manner by varying the soda content in the glass composition.

It was recognised that the colouration was confined to a surface layer no more than several micrometers in depth. Accordingly, investigation was undertaken which ascertained that it would be sufficient to alter the soda content only in a surface layer. Such limited composition alteration may be achieved by known alkali metal ion exchange procedures.

In particular, if the parent glass composition contains lithium ions, then sodium ions can be exchanged for such lithium ions. Such ion exchange is described in detail in patents mentioned earlier.

Further studies revealed that no substantial change occurs when the potash ($K_2O$) content of a glass is changed, either by compositional change or by ion exchange. Thus, the present invention is concerned essentially with changes in either soda content, lithia content, or both. Increases in soda content and/or soda to total alkali metal oxide ratio shifts the absorption peaks to higher values, thus providing blues, reds and purples. This has been termed increasing the purpleinity of the colour. In contrast, a decrease in soda, shifts the absorption peaks to lower values, thus favouring a yellow colour.

The ion exchange technique is particularly desirable for a number of reasons. It is much easier to carry out a composition change by ion exchange than it is to effect the same change by shifting ingredients in a glass batch. Further, it lends itself to close control and may be adapted to either batch or continuous production. Also, alkali adjustment in a parent glass batch may create undesirable melting and/or physical properties in a glass.

Another feature of the ion exchange procedure is the capability of producing a gradient or a stepped variation across the surface of a glass article. Thus, a glass lens, for example, may be immersed in a salt bath for ion exchange and then slowly withdrawn to provide a constantly changing degree of ion exchange. Alternatively, the lens may be withdrawn in two or more steps to provide bands or sections of different colours after reduction.

It will be understood, of course, that the colours produced in a given heat treatment in a reducing atmosphere will vary with soda content. Hence, a constantly varying soda content provides a constantly varying, or gradient, colouration.

It will also be appreciated that the depth to which the colour change is effected will depend on the depth of the alkali ion exchange. In particular, the time and temperature of the ion exchange may be sufficiently limited that the depth of ion exchange is less than the depth of colouration effected during the subsequent thermal reduction treatment. This will produce a colour overlay which will be different from either the original or the completely altered colour. For example, this might occur if the ion exchange is limited to about half the effective depth of the thermal reduction treatment. The unaltered zone then may be expected to retain its original colour, whereas the ion exchanged overlay will be different.

The permanently coloured, photochromic glass articles of the invention may be chemically strengthened after the reduction treatment in accordance with known practice. However, this ion exchange may alter further the permanent colour in accordance with the present teaching. Therefore, suitable compensation must be made if chemical strengthening is required.

The invention is further described and illustrated with reference to specific examples:

Example 1 (Comparative)

In the course of developing a photochromic sheet glass for use in forming sagged sunglass lenses, a glass having the following calculated composition in parts by weight was melted: 59.6 $SiO_2$, 19.6 $B_2O_3$, 9.7 $Al_2O_3$, 2.2 $Li_2O$, 2.0 $K_2O$, 5.6 $Na_2O$, 0.17 Ag, 0.42 Cl, 0.09 Br, 0.009 CuO and 0.68 PbO. The glass was melted in a small continuous melting unit having a capacity of 80 pounds (36.2 kgs). Melting temperatures were in the range of 1375 to 1400°C. The melting unit had a normal pull rate of 20 pounds (9.06 kgs) per hour with a residence time in the unit of 3 to 3½ hours. Curved lens blanks having a diameter of 65 mm were pressed and annealed in a small continuous lehr with a top temperature of 425°C. The annealing cycle was 20 minutes in length.

Pressed lens samples were taken hourly and ground and polished to a 1.5 mm thickness. These lenses were then subjected to a heat treatment at 625°C for 15 minutes to sag the lenses and develop photochromicity in the glass.

At one point in the course of the glass development, the composition was changed by removing 0.75% $Na_2O$ and adding a corresponding amount of $B_2O_3$. Lens samples taken before and after this change were heat treated in a flowing atmosphere of hydrogen in accordance with a heat treating schedule of 360°C for 40 minutes.

It was observed that the earlier samples, that is, the higher soda content glasses, had a more purple colour. In other words, decreasing the soda content moved the absorption to a lower level and produced an orange-yellow colour, whereas the higher soda content glass had a purple colour.

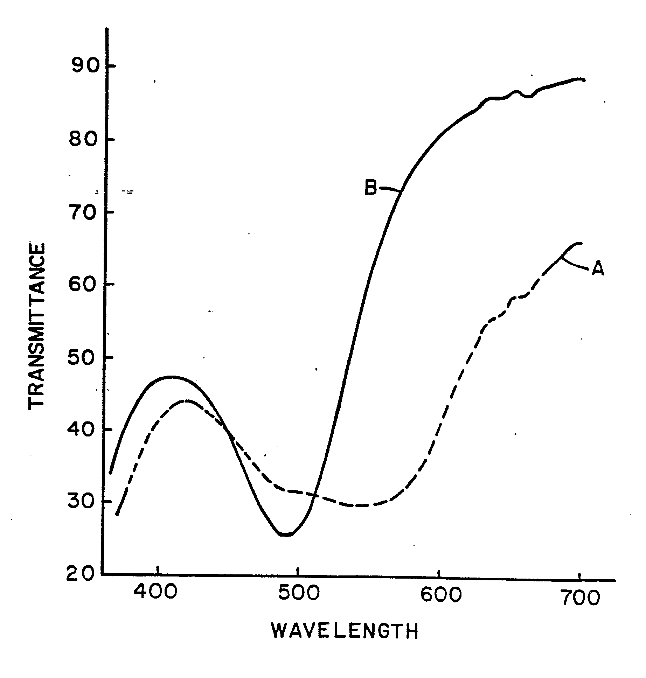

The distinct colour difference is better seen in transmittance curves for the two samples. These curves are shown in the single sheet of the accompanying drawing which is a graphical illustration of transmission curves as obtained on a spectrophotometer, wherein undarkened transmittance is plotted along the vertical axis versus wavelength in nanometers along the horizontal axis. Curve A is the transmittance curve over the wavelength range of 370 to 700 nm for the high soda content (5.88% $Na_2O$) glass, and Curve B is the corresponding curve for the lower soda content (5.13% $Na_2O$) glass. The curves represent transmission measurements made on a Cary 17D spectrophotometer.

Example 2

Sheet glass samples were obtained from a commercial tank run of the glass shown in Example 1. The samples were heated at 625°C for fifteen minutes in a box furnace on a metal surface to simulate the cycle used in producing photochromic lenses by heat treating and sagging.

Prior to the heat treatment for sagging lenses and developing photochromicity in the glass, the samples were separated into two lots. One lot was immersed in a 100% $NaNO_3$ salt bath for sixteen hours with the bath held at 400°C. This maintained the bath in a molten state and effected ion exchange between sodium ions from the bath and lithium ions from the glass to a depth of several microns (μm). The second lot was left untreated for comparison.

Both sets of samples were then exposed to a flowing atmosphere of hydrogen at 360°C for 40 minutes. The colours of the two sets of samples were distinctly different. The ion-exchanged set had a purple colour, while the non-exchanged set was orange. Thus, the increase of soda content by ion exchange produced a similar effect to that resulting from a higher soda content in the glass batch in Example 1.

## Example 3

Strips of sheet glass were used as in Example 2. The samples were rendered photochromic by heat treatment at 625°C for five minutes.

Prior to having photochromic behaviour developed therein, the samples were partially submerged in a 100% sodium nitrate bath for one hour at 400°C. The samples were then removed, cleaned, and exposed to a flowing stream of hydrogen at 360°C for forty minutes.

Following the hydrogen reduction treatment, it was observed that the portions of the samples submerged in the salt bath were purple similar to the ion exchanged samples of Example 2. The unexposed portions, that is the portions of the samples above the bath, were an orange colour, similar to the untreated, comparison samples of Example 2.

## Example 4 (Comparative)

In this example, strips of sheet glass were used that corresponded to those used in Examples 2 and 3. Three sets of glass samples were provided.

One set was suspended in a 100% sodium nitrate bath for one hour with the bath at 400°C. A second set was suspended similarly in a molten bath composed of 60% potassium nitrate and 40% sodium nitrate, the treatment again being for one hour with the bath at 400°C. The third set was given no ion exchange treatment, but rather held as a base or comparison set.

The ion exchanged samples were cooled and cleaned. All three sets were then exposed to a flowing stream of hydrogen for twenty (20) minutes while heated at a temperature of 380°C. Following this treatment, the samples ion exchanged in a 100% sodium nitrate bath had a pink colour; those treated in a mixed alkali nitrate bath appeared pink with an orangish cast; and the untreated set appeared yellow with an orangish cast.

This illustrates that any known sodium-for-lithium ion exchange mechanism may be employed. However, as is well known to those familiar with ion exchange, the rate of, and hence extent of, exchange may vary somewhat with different exchange media.

## Example 5

Example 2 was then essentially repeated, except that the samples were heat treated at 625°C prior to ion exchange. It was observed that this had no substantial effect on the nature of the colouration obtained by ion exchange and hydrogen reduction. It was noted that the samples rendered photochromic prior to ion exchange had a somewhat greater absorption. Also, in stepped samples, the demarcation line appears sharper.

## Example 6 (Comparative)

In order to determine the effect of lithium ion exchange, samples corresponding to those in prior examples were immersed in a molten lithium salt bath. The bath was composed of a eutectic mixture of 80 mole percent lithium sulfate ($Li_2SO_4$) and 20 mole percent potassium sulfate ($K_2SO_4$). The samples were partly immersed for 15 minutes in a bath operating at 600°C. They were then reduced in a flowing hydrogen atmosphere at 370°C for 40 minutes.

The samples appeared yellow overall. However, the absorption peak in the ion-exchanged portion was moved from 490 nm to 450 nm.

The experiment was repeated using glass samples obtained with the soda level in the composition at the somewhat higher value of 5.88%. This glass normally provided a purplish colour when reduced. In this case, the submerged (ion exchange) portion tended to be yellow with the 490 nm absorption peak moving as before, but with a secondary peak at 580 nm being eliminated.

These results demonstrate that shifting the $Li_2O:Na_2O$ ratio toward the $Na_2O$ side tends to produce redder or purpler colours on reduction. Conversely, shifting the ratio toward the $Li_2O$ shifts the colour toward yellow, and the absorption peak to a lower value.

## Example 7 (Comparative)

In this experiment, samples were prepared from a photochromic glass having a permanent grey colouration through the glass and composed in parts by weight of 58.6 $SiO_2$, 17.5 $B_2O_3$, 11.5 $Al_2O_3$, 2.2 PbO, 2.0 $Li_2O$, 6.7 $Na_2O$, 1.5 $K_2O$, 0.3 Ag, 0.37 Cl, 0.13 Br, 0.22 F, 0.025 CuO, 0.041 NiO and 0.029 $Co_3O_4$.

A glass sample was partially immersed in a 100% potassium nitrate molten bath operating at 400°C, and maintained for one hour. The partially ion exchanged glass was then fired in hydrogen for forty (40) minutes at 360°C, and subsequently at 380°C for thirty (30) minutes with enhanced hydrogen flow.

Transmittance curves were obtained on a spectrophotometer for both the ion exchanged glass portion of the sample and the untreated portion. The shapes of the two transmittance curves were nearly identical. However, that of the ion exchanged glass was somewhat more transmitting (lighter). This suggests the potassium ions have little effect except as they alter the contents of other ions.

## Example 8

Example 3 was repeated employing uncut lenses, either whole or quartered, for comparison. The samples were ion-exchanged for an hour at 400°C in a sodium nitrate bath. They were then fired in a flowing hydrogen atmosphere for 40 minutes at temperatures varying from 360°C to 440°C.

When the treated samples were measured, the spectral transmittance curves were similar in shape at all temperatures. However, the degree of absorption in the lower end of the spectrum steadily increased with reduction temperature. At the same time, the absorption peak moved down somewhat, thus enhancing the yellow colour. This is shown in the following table of temperature (°C) of reduction and absorption peak (nm):

| Temp. | Ab. peak |
|-------|----------|
| 360 | 480 |
| 380 | 450 |
| 400 | 460 |
| 420 | 440 |
| 440 | 410 |

These results confirm that firing temperatures should not exceed 450°C, and preferably are of the order of 400°C or lower.

Example 9 (Comparative)

Example 6 was repeated with a constant hydrogen reduction cycle of 40 minutes at 380°C and a 425°C salt bath temperature for the ion exchange. The samples were submerged in the salt bath for times varying from 5 to 60 minutes in five steps. The nature of transmittance curves measured on the treated glass samples was similar in all cases with the degree of absorption varying slightly. This indicates that, beyond a short minimum time, time of ion exchange is relatively unimportant, except with respect to depth of ion penetration.

Example 10

Samples of four different commercial photochromic glasses were tested to confirm the general applicability of the invention to such glasses. The glasses employed had the following approximate compositions in parts by weight on the oxide basis:

|  | A | B | C | D |
|-----|------|------|------|------|
| $SiO_2$ | 55.9 | 55.8 | 17.1 | 19.1 |
| $Al_2O_3$ | 9.0 | 6.5 | 27.2 | 28.3 |
| $B_2O_3$ | 16.2 | 18.0 | 13.8 | 14.3 |
| $P_2O_5$ | — | — | 14.6 | 13.3 |
| $Li_2O$ | 2.65 | 1.88 | 1.45 | 0.99 |
| $Na_2O$ | 1.85 | 4.04 | 0.12 | 1.19 |
| $K_2O$ | — | 5.76 | 10.3 | 8.86 |
| PbO | 5.05 | — | — | — |
| BaO | 6.7 | — | 9.6 | 9.32 |
| CaO | — | — | 3.1 | 3.30 |
| MgO | — | — | — | 0.04 |
| SrO | — | — | — | 0.13 |
| $ZrO_2$ | 2.3 | 4.89 | 0.77 | 0.92 |
| $TiO_2$ | — | 2.17 | 0.53 | 0.54 |
| Ag | 0.16 | 0.24 | 0.23 | 0.28 |
| Cl | 0.29 | 0.20 | 0.44 | 0.45 |
| Br | 0.72 | 0.13 | 0.23 | — |
| CuO | 0.036 | 0.011 | 0.33 | 0.013 |
| F | 0.2 | — | — | — |

Samples of each glass were immersed in a molten $NaNO_3$ salt bath at 400°C for one hour.

After cleaning, the ion exchanged samples, as well as untreated comparison samples, were fired in a hydrogen atmosphere for 40 minutes. This was repeated at temperatures of 360, 380, 400 and 420°C. Spectral transmittance curves were measured with a Cary 17D spectrophotometer. The observed absorption peaks are shown in the following table wherein the nature of the sample (glass, ion exchange, and temperature of $H_2$-firing) and the absorption peak (in nanometers) are listed.

| No. | Sample Ion exchanged | T | Absorption peak |
| --- | --- | --- | --- |
| A | No | 360 | 485 |
| A | Yes | 360 | 530 |
| A | No | 380 | 485 |
| A | Yes | 380 | 495 |
| A | No | 400 | 480 |
| A | Yes | 400 | 485 |
| A | No | 420 | 465 |
| A | Yes | 420 | 465 |
| B | No | 360 | 510 |
| B | Yes | 360 | 535 |
| B | No | 380 | 495 |
| B | Yes | 380 | 550 |
| B | No | 400 | 490 |
| B | Yes | 400 | 545 |
| B | No | 420 | 480 |
| B | Yes | 420 | 535 |
| C | No | 360 | 450 |
| C | Yes | 360 | 520 |
| C | No | 380 | 445 |
| C | Yes | 380 | 505 |
| C | No | 400 | 440 |
| C | Yes | 400 | 460 |
| C | No | 420 | 435 |
| C | Yes | 420 | 440 |
| D | No | 360 | 465 |
| D | Yes | 360 | 520 |
| D | No | 380 | 445 |
| D | Yes | 380 | 500 |
| D | No | 400 | 440 |
| D | Yes | 400 | 460 |
| D | No | 420 | 435 |
| D | Yes | 420 | 440 |

## Claims

1. A method of producing a permanent colouration in a surface zone on a photochromic glass article wherein a silver halide is the photochromic agent, wherein the glass composition contains at least one alkali metal oxide selected from $Na_2O$, and $Li_2O$, and wherein the glass article is heat treated at a temperature not exceeding about 450°C under reducing conditions for a time at least sufficient to modify the light absorption characteristics of the article surface, characterised in that the content of lithium or sodium oxide is altered by exchanging in at least a portion of the surface colouration zone of the article sodium ions from an external source for lithium ions from the glass surface zone by immersing the article at least partially in a molten salt bath composed of sodium nitrate for at least five minutes, the bath being maintained at a temperature in the range of 325° to 450°C, to correspondingly shift the absorption characteristics imparted to the article during the reduction treatment.

2. A method as claimed in claim 1 characterised in that the time-temperature conditions for the alkali metal ion exchange are so limited that the depth of ion exchange effected is less than the depth of permanent colouration effected by the reduction treatment.

3. A method as claimed in claim 1 or claim 2 characterised in that the ion-exchanged glass article is heat treated in a flowing, hydrogen containing atmosphere at a temperature in the range of 350° to 400° for a time of at least five minutes.

4. A method as claimed in any of claims 1—3 characterised in that the glass is only partially immersed in the salt bath whereby the colour change is effected only in the immersed portion after reduction.

5. A method as claimed in any of claims 1 to 3 characterised in that the glass at least partially immersed in the molten salt bath is withdrawn at a predetermined rate while ion exchange is occurring, thereby effecting a gradient change in alkali metal content across the glass surface and a corresponding continuing variation in ultimate colour change.

## Patentansprüche

1. Verfahren zur Herstellung eines permanenten Färbung in einer Oberflächenzone auf einem photochromen Glasgegenstand, wobei das photochrome Mittel ein Silberhalogenid ist, wobei die Glaszusammensetzung wenigstens ein Alkalimetalloxid aufweist, das aus $Na_2O$ und $Li_2O$ ausgewählt ist, und wobei der Glasgegenstand bei einer etwa 450°C nicht übersteigenden Temperatur unter Reduktionsbedingungen während einer Zeitdauer wärmebehandelt ist, die wenigstens ausreicht, um die Lichtabsorptionseigenschaften der Gegenstandsoberfläche zu modifizieren, dadurch gekennzeichnet, daß der Gehalt an Lithium- oder Natriumoxid geändert wird, indem in wenigstens einem Teil der Oberflächenfärbungszone des Gegenstands Natriumionen aus einer externen Quelle gegen Lithiumionen aus der Glasoberflächenzone ausgetauscht werden, indem der Gegenstand wenigstens teilweise in ein aus Natriumnitrat bestehendes Salzschmelzbad während wenigstens fünft Minuten eingetaucht wird, wobei das Bad auf einer Temperatur in dem Bereich von 325°C bis 450°C gehalten wird, um dementsprechend die Absorptionseingenschaften einzustellen, die dem Gegenstand während der Reduktionsbehandlung verliehen werden.

2. Verfahren nach Anspruch 1, dadurch gekennzeichnet, daß die Zeit-Temperatur-Bedingungen für den Alkalimetallionenaustausch so begrenzt sind, daß die Tiefe des vorgenommenen Ionenaustausches geringer als die Tiefe der durch die Reduktionsbehandlung bewirkten permanenten Färbung ist.

3. Verfahren nach Anspruch 1 oder 2, dadurch gekennzeichnet, daß der Glasgegenstand mit ausgetauschten Ionen in einer strömenden wasserstoffhaltigen Atmosphäre bei einer Temperatur im Bereich von 350° bis 400°C während einer Zeit von wenigstens fünf Minuten wärmebehandelt wird.

4. Verfahren nach einem der Ansprüche 1 bis 3, dadurch gekennzeichnet, daß das Glas nur teilweise in das Salzbad eingetaucht wird, wodurch der Farbwechsel nach der Reduktion nur in dem eingetauchten Abschnitt vorgenommen wird.

5. Verfahren nach einem der Ansprüche 1 bis 3, dadurch gekennzeichnet, daß das Glas, das wenigstens teilweise in das Salzschmelzbad eingetaucht ist, mit einer vorher bestimmten Geschwindigkeit während des Auftretens des Ionenaustausches herausgezogen wird, wodurch eine Gradientenänderung im Alkalimetallgehalt quer zur Glasoberfläche und eine dementsprechend sich fortsetztende Veränderung bei dem letzen Farbwechsel bewirkt wird.

## Revendications

1. Un procédé de création d'une coloration permanente dans une zone superficielle d'un article en verre photochromique dont l'agent photochromique est un halogénure d'argent, dans lequel la composition du verre contient au moins un oxyde de métal alcalin choisi parmi $Na_2O$ et $Li_2O$ et dans lequel l'article en verre est traité thermiquement à une température ne dépassant pas environ 450°C sous des conditions réductrices pendant un temps au moins suffisant pour modifier les caractéristiques d'absorption lumineuse de la surface de l'article, caractérisé en ce que la teneur en oxyde de lithium ou de sodium est altérée par échange, dans au moins une portion de la zone de coloration superficielle de l'article, d'ions sodium provenant d'une source extérieure en substitution à des ions lithium de la zone superficielle du verre par immersion au moins partielle de l'article dans un bain salin fondu composé de nitrate de sodium pendant au moins cinq minutes, le bain étant maintenu à une température se situant dans l'intervalle de 325 à 450°C, à l'effet de déplacer en correspondance les caractéristiques d'absorption conférées à l'article pendant le traitement de réduction.

2. Un procédé selon la revendication 1, caractérisé en ce que les conditions temps-température de l'échange d'ions de métaux alcalins sont limitées de telle manière que la profondeur de l'échange ionique réalisé soit moindre que la profondeur de la coloration permanente obtenue par le traitement de réduction.

3. Un procédé selon la revendication 1 ou selon la revendication 2, caractérisé en ce que l'article en verre ayant été soumis à l'échange d'ions est traité thermiquement dans une atmosphère en écoulement contenant de l'hydrogène à une température se situant dans l'intervalle de 350 à 400° pendant une durée d'au moins cinq minutes.

4. Un procédé selon l'une quelconque des revendications 1 à 3, caractérisé en ce que le verre n'est immergé que partiellement dans le bain salin, la modification de coloration ne se trouvant ainsi réalisée que dans la portion immergée après réduction.

5. Un procédé selon l'une quelconque des revendications 1 à 3, caractérisé en ce que le verre au moins partiellement immergé dans le bain salin fondu est retiré à une vitesse prédéterminée pendant que l'échange ionique a lieu, en assurant ainsi l'obtention d'une modification graduelle de la teneur en métaux alcalins sur l'étendue de la surface du verre et d'une variation continue correspondante de la modification de couleur finale.